(19) Europäisches Patentamt / European Patent Office / Office européen des brevets

(11) **EP 4 482 327 B1**

(12) **EUROPEAN PATENT SPECIFICATION**

(45) Date of publication and mention
of the grant of the patent:
**18.02.2026 Bulletin 2026/08**

(21) Application number: **23706023.1**

(22) Date of filing: **20.02.2023**

(51) International Patent Classification (IPC):
*B02B 1/08* (2006.01)    *A23L 11/00* (2025.01)
*A23L 11/30* (2016.01)    *A23L 5/20* (2016.01)
*A21D 6/00* (2025.01)    *A23P 10/40* (2016.01)
*A23L 11/45* (2021.01)    *A23L 11/65* (2025.01)

(52) Cooperative Patent Classification (CPC):
**A23L 11/05; A21D 6/003; A23L 5/21; A23L 11/07;
A23L 11/31; A23L 11/45; A23L 11/65; A23P 10/40;
B02B 1/08**

(86) International application number:
**PCT/EP2023/054178**

(87) International publication number:
**WO 2023/156653 (24.08.2023 Gazette 2023/34)**

(54) **A PROCESS FOR THE PRODUCTION OF A SOYBEAN FLOUR HAVING A HIGH SOLUBILITY**

VERFAHREN ZUR HERSTELLUNG EINES SOJAMEHLS MIT HÖHER LÖSLICHKEIT

PROCEDE DE PRODUCTION D'UNE FARINE DE SOJA PRESENTANT UNE SOLUBILITÉ ÉLEVÉE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Validation States:
**KH**

(30) Priority: **21.02.2022 IT 202200003173
21.02.2022 IT 202200003176**

(43) Date of publication of application:
**01.01.2025 Bulletin 2025/01**

(73) Proprietor: **La Sanfermese S.p.A.
46040 Piubega (MN) (IT)**

(72) Inventor: **PELLADONI, Andrea
25014 Castenedolo (BS) (IT)**

(74) Representative: **Botti & Ferrari S.p.A.
Via Cappellini, 11
20124 Milano (IT)**

(56) References cited:
**CN-A- 107 660 692    GB-A- 1 443 160
JP-A- 2004 141 155    JP-A- 2016 047 021**

**Description**

<u>Field of application</u>

The present invention generally refers to the field of food industry. In particular, the invention relates to a process for the production of a soybean flour having a high solubility, in particular suitable for the production of plant food, such as for example soybean-based beverages, tofu and derivatives thereof.

<u>Prior art</u>

In recent years, the reduction of consumption of food of animal origin, including for example cold cuts and cured meats, has been encouraged, and, more generally, healthier and eco-friendlier dietary habits are being promoted.
Consequently, the consumers supplemented their diet with a more frequent consumption of fruits, cereals, legumes and vegetables. Among these, soy stands out because of the high protein level, the quality of the proteins and the micro-nutritional profile.
As a matter of fact, among its various uses and applications in the food field, soy may be used for the production of plant products, including soybean beverage, tofu, yogurt and derivatives thereof.
Moreover, soy has a high nutritional value, contributes to controlling blood sugar and cholesterol concentrations, as well as supporting bone mineralization, thus slowing down osteoporosis-related processes, thanks to the considerable presence of mineral salts, including calcium and phosphorus, and of phytoestrogens in said legumes.
However, it is known that soy, like most of legumes, may have an unpleasant taste typically due to the presence of antinutritional factors contained in legumes; this taste is characterized by a slightly bitter note which a consumer generally does not like, and which limits the consumption of soybean flours and of the products obtained therefrom.
In particular, said unpleasant taste of soy is primarily caused by the activity of special enzymes present in soybeans; in fact, if the enzymes are not correctly inactivated, the end product may have notes of bitter taste that a consumer may not like.
However, enzymatic inactivation, which typically occurs by heat treatment or cooking of soy, is strongly associated to the risk of degrading soy precious nutritional phytochemical compounds.
To eliminate this slightly bitter taste that the consumer does not like, various types of traditional processes, both wet and dry, are known in the art.
In particular, the product of the traditional wet process is a soybean extract, that is subsequently dried, for example by spray drying, thus obtaining an end product consisting of a soybean extract in the form of a powder.
Said process for the preparation of said powdered soybean extract, also known as "process of soy wet extraction", comprises the following steps.
Soybeans, possibly decorticated, are soaked in an aqueous solution (soaking step), generally purified water, for a given time period.
The step of soaking soybeans is in fact necessary to improve the execution of the subsequent step of wet milling the soybeans.
After wet milling, a suspension consisting of milled soybeans and water is obtained; said suspension is then subjected to a step of separation, preferably by decanter, wherein the insoluble part, called "okara" (comprising soy fibers, insoluble proteins, oil, carbohydrates), which is the waste product of the process, separates due to gravity from the soluble part of soy.
The above-mentioned soluble part of soy is then subjected to a step of cooking or heat treatment, to inactivate soy enzymes, thus reducing the slightly bitter taste that is typical of soy and undesirable by the end consumer, and to sterilize the end product, reducing the possible microbial load therein.
At the end of the above-mentioned steps, a soybean extract is obtained, which is then subjected to a drying step, preferably by spray drying, thus obtaining a soybean extract in the form of a powder, which constitutes the end product.
The spray-drying step may be very expensive and not very sustainable, when performed at an industrial level, and, moreover, it considerably prolongs the timing of the total process.
Instead, the above-mentioned traditional dry process includes dry milling soybeans, which may be possibly previously decorticated, thus obtaining a soybean flour in a dry manner.
Moreover, these soybean flours may be defatted; in particular, the defatted flours are obtained from the residue of soybean squeezing , after oil extraction. Defatted flours have a very low oil and lecithin content, thus worsening the nutritional value of the end product, and are characterized by a low solubility, due to the heat treatments undergone and the concentration of insoluble fibers.
GB1443160 discloses a process for producing a high-protein product from an aqueous suspension of a high protein flour comprising, i) deactivating lipoxygenase enzyme, present in the flour, to an extent of 95 to %, ii) reducing carbohydrate to a content of less than 20 % by weight of solids present in the high-protein product, and iii) deactivating trypsin inhibitor and urease enzyme, present in the flour, to an extent of substantially 100 % under conditions such that the lysine content remains in excess of 90 % of that of the original highprotein flour.

CN107660692 discloses a production method of instant bean curd powder, the method comprising the following steps: soybean peeling, ultrafine grinding, pulping, blending, sterilization, membrane separation and concentration, spray drying, granulation, coagulant adding and packaging to prepare the instant bean curd powder.

JP2016047021 discloses a bakery dough comprising soy flour A having an NSI of 40 to 70% and soy flour B having an NSI of 71 to 98%, wherein the ratio of the content of soy flour B to the content of soy flour A (soy flour B content/soy flour A content) is 0.02 to 0.7.

JP2004141155 discloses a processed soybean powder material obtained by heat-treating raw soybeans, characterized by a water-soluble nitrogen index of 55-70, a lipoxygenase (LOX) value of 20 or less, no n-hexanal or a relative value of 10% or less when the amount contained in raw soybeans is taken as 100%, and a sugar content refractive index (Brix value) of 3.0-6.0 when dissolved in water to a concentration of 10% by weight.

The use of the currently commercially available soybean flours is not very widespread and, as yet, it has not been very successful, since these flours have a solubility degree that may be not sufficiently high or satisfactory to obtain specific food products that require a complete and homogeneous dissolution of said flours in an aqueous medium, such as for example soybean-based beverages , including soybean milk, and tofu.

As a matter of fact, it is possible to observe the formation of non-dissolved solid residues after mixing said soybean flours in aqueous media and/or the separation of the liquid phase from the solid phase in plant products based on said flours, precisely because of the insufficient solubility of these flours in an aqueous medium.

Moreover, the above-mentioned soybean flours obtained in a dry manner are often still characterized by the slightly bitter taste that is typical of soy, since the above-mentioned traditional dry processes are not able to effectively inactivate the soy enzymes responsible for said taste.

Therefore, the problem underlying the present invention is to provide a process for the production of a full-fat soybean flour characterized by a high solubility and a high fiber content, and which is, at the same time, free of said slightly bitter taste that is typical of this legume.

Summary of the Invention

The above-mentioned technical problem was solved by the present invention by providing a process for the production of a soybean flour having a high solubility corresponding to an NSI (nitrogen solubility index) value higher than 95%, determined by the methodology of Araba, M., & Dale, N.M. (1990) "Evaluation of protein solubility as an indicator of overprocessing soybean meal". Poultry Science 69; 76-83, said process comprising the steps of:

i) pre-drying soybeans at a temperature between 40°C and 60°C for a time period between 6 hours and 18 hours;

a) drying said pre-dried soybeans in a first dryer set at a temperature between above 90°C and 95°C, preferably between 92°C and 95°C, for a time period between 8 minutes and 18 minutes, obtaining dried soybeans having a temperature between 75°C and 85°C;

b) subjecting said dried soybeans kept at a temperature lower than 80°C, preferably between 0°C and 80°C, to dry micronization, thus obtaining a soybean micronizate having a particle size equal to or less than 200 $\mu$m;

c) drying the soybean micronizate in a second dryer set at a temperature between 110°C and 130°C for a time period less than 20 seconds, preferably between 2 seconds and 10 seconds, thus obtaining a dried soybean micronizate having a temperature between 75°C and 85°C;

d) cooling said dried soybean micronizate, thus obtaining said soybean flour having a high solubility,

said process not comprising any step of soaking said soybeans and/or said soybean micronizate in water or other aqueous solution.

Preferably, at the end of the pre-drying step i), said soybeans have a moisture content lower than 13%, more preferably between 10-12%.

Preferably, at the end of the drying step a), said soybeans have a moisture content lower than 10%, more preferably between 7% and 9%.

Preferably, the second dryer is a flash drying thermopneumatic plant.

Preferably, after the pre-drying step i) and before the drying step a), the soybeans are subjected to a decortication step ii).

Preferably, the soybean flour having a high solubility has a moisture content lower than 5%, more preferably lower than 4%, even more preferably lower than 3%.

Preferably, the soybean flour having a high solubility has a particle size of less than 200 μm, more preferably between 190 μm and 5 μm.

Preferably, the soybean flour having a high solubility has an NSI value higher than 97%, more preferably higher than 98%, even more preferably between 98.5% and 100%.

Preferably, the soybean flour having a high solubility has a protein content higher than 35%, more preferably between 38% and 45% by weight on the dry weight.

Preferably, the soybean flour having a high solubility has a shelf-life at room temperature under vacuum of more than 6 months, more preferably between 6 months and 12 months.

Preferably, the soybean flour having a high solubility has a lipoxygenase content reduced by at least 75% with respect to the lipoxygenase content of the soybeans to be subjected to step a) or step i).

Preferably, before step b) and after step a), the dried soybeans are cooled down to a temperature of between 0°C and 30°C.

Preferably, the above-mentioned process does not comprise a step of defatting the soybeans.

The present invention also relates to a soybean flour having a high solubility corresponding to an NSI (nitrogen solubility index) value higher than 95%, determined by the methodology of Araba, M., & Dale, N.M. (1990) "Evaluation of protein solubility as an indicator of overprocessing soybean meal". Poultry Science 69; 76-83, and having a moisture content lower than 4% and a particle size of less than 200 μm, wherein nutritional values of said soybean flour are:

| TOTAL proteins | 38% ± 5% |
|---|---|
| Soluble proteins | 28.5% ± 5% |
| Ashes | 10% ± 5% |
| Fats | 16.5% ± 5% |
| Fibers | 18.5 ± 5% |
| Carbohydrates | 10% ± 5% |

, said soybean flour being obtainable by the above-mentioned process according to the invention and having a lipoxygenase content reduced by at least 75% with respect to the lipoxygenase content of said soybeans to be subjected to said step a) or said step i).

Preferably, said soybean flour having a high solubility has a moisture content lower than 3%.

Preferably, said soybean flour having a high solubility has a particle size between 190 μm and 5 μm.

Preferably, said soybean flour having a high solubility has an NSI value higher than 97%, more preferably higher than 98%, even more preferably between 98.5% and 100%.

Preferably, said soybean flour having a high solubility has a protein content higher than 35%, more preferably between 38% and 45% by weight on the dry weight.

Preferably, said soybean flour having a high solubility has a shelf-life at room temperature under vacuum of more than 6 months, preferably between 6 months and 12 months.

The process for the production of a soybean flour having a high solubility corresponding to an NSI (nitrogen solubility index) value higher than 95%, according to the present invention, advantageously comprises the execution of a drying step (step a)) prior to the step of micronization of the soybeans (step b)), and the execution of a further drying step after said micronization step (step c)).

Before performing step a), the present process comprises the execution of the pre-drying step i), which advantageously occurs at a temperature between 40°C-60°C, thereby preventing the denaturation of the proteins contained in soy and, thus, maintaining their solubility degree.

Conveniently, during the drying step a) of the present process, the temperature is raised, in a controlled way, until the temperature of the soybeans reaches a value between 75°C and 85°C.

Advantageously, the drying step a) has the effect of inactivating soy enzymes, and of making soybeans more friable, thus facilitating the execution of the subsequent micronization step b).

Step b) provides for dry micronization of soy down to a particle size equal to or less than 200 μm, so as to obtain a soybean flour that can be easily homogeneously solubilized in an aqueous medium, for the production of food products based on soybean flour, such as for example soybean beverage and tofu. Advantageously, said micronization step allows to obtain an extremely fine soybean micronizate, having a particle size as described below; said particle sizes advantageously allow to optimize the solubilization of soybean flour according to the present invention in an aqueous medium, thereby considerably reducing the formation of possible solid residues.

A further advantage of step b) of dry micronization according to the present process is to further promote the

EP 4 482 327 B1

enzymatic inactivation of treated soybeans.

The expression "dry micronization", as used herein, means a micronization of dried soybeans, i.e. soybeans characterized by a moisture content lower than 13%.

In particular, the soybean flour obtained according to the present process has a size distribution wherein at least 98% of the particles has a particle size of less than 200 $\mu$m, preferably between 190 $\mu$m and 5 $\mu$m.

In particular, 90% of the particles has a particle size between 150 $\mu$m and 10 $\mu$m, 70% of the particles has a particle size between 80 $\mu$m and 15 $\mu$m, 50% of the particles has a particle size between 45 $\mu$m and 16 $\mu$m.

Moreover, the drying step c) is preferably a flash drying thermopneumatic treatment, that advantageously allows to dry the soybean micronizate, reducing the surface moisture of the micronizate, without considerably increasing its temperature, therefore avoiding that high temperatures may damage the soy organoleptic properties, and at the same time promoting enzymatic inactivation of treated soybeans.

Moreover, said process step advantageously increases the ability of soybean flour to hydrate, thus promoting a complete and homogeneous dissolution of the soybean flour according to the present invention in an aqueous medium; moreover, the drying step c) ensures the chemical-physical stability of soybean flour for its whole shelf-life.

According to an embodiment the present invention, the soybeans are subjected to a decortication step ii), before said step a) and after said step i) of pre-drying.

Advantageously, the decortication step ii) allows to obtain a soybean flour having a high protein content, since the coat (or skin) of the soybeans, which mainly consists of vegetable fibers, is discarded.

Moreover, the decortication step ii) promotes the execution of the subsequent step of micronization of the soybeans, since the absence of the coat (or skin) of the soybeans allows to obtain a soybean micronizate advantageously characterized by a lower average particle size compared to the micronizate obtained from non-decorticated soybeans.

According to an equally preferred embodiment of the present invention, the soybeans of the present invention are entire, that is they are not decorticated.

The soybean flour obtained from non-decorticated soybeans, which has a lower protein content and a higher particle size compared to soybean flour obtained from decorticated soybeans, is preferably advantageously used to increase fiber intake into plant products based on this particular flour type. The soybean flour obtained from non-decorticated soybeans advantageously also allows to increase water absorption, thereby obtaining particularly homogeneous plant products and with a creamy consistency.

Advantageously, steps a)-c) of the present invention are performed keeping the soybeans and the soybean micronizate at a controlled temperature, in particular lower than 85°C, to perform an effective enzymatic inactivation, without damaging and making insoluble the soy proteins, as well as increasing the solubility of the other ingredients.

As a matter of fact, soy enzymes and soluble soy proteins have a different sensitivity to temperature, in particular the enzymatic inactivation begins at a lower temperature compared to the temperature of inactivation of soluble soy proteins.

Moreover, the micronization step allows to increase soy solubility and, at the same time, promotes enzymatic inactivation.

Conveniently, said steps of the present process are advantageously performed in a dry manner; in fact, the process according to the present invention does not conveniently comprise any step of soaking the soybeans and/or the soybean micronizate in water or other aqueous solution.

Unlike the above-described traditional process of soy wet extraction, which specifically teaches at least one step of soy soaking, the present process has the following advantages.

The present process does not comprise any extraction step, thus reducing the connected plant costs, and reducing the timing of production of soybean flour according to the present invention on an industrial scale.

Since the present process does not comprise any step of extraction and/or soaking of the soybeans in water, a further advantage of the present process consists in that no production waste is produced, but all parts of the soybeans are used, which are thus subjected to all the steps a)-c) of the present invention.

Moreover, the present process advantageously enables to increase the yield of the end product, as well as its quality in terms of organoleptic and nutritional properties, as well as properties of microbiological stability during its whole shelf-life, as in-depth detailed hereinafter.

In fact, whereas in the traditional wet process, the okara (representing a waste product of the process) may constitute more than 50% w/w of the starting soy, the process according to the present invention advantageously allows to use all soy parts, without waste production, thus using 100% of the starting soy.

In the embodiment of the present process according to which decorticated soybeans are used, the only process waste substantially consists of soybean coats.

Compared to the traditional process to obtain soybean flour in a dry manner, moreover, the soybean flour obtained according to the present invention is characterized by a better solubility, which makes it particularly suitable and advantageous for the production of soybean-based plant products.

The process according to the present invention is preferably carried out as a continuous process.

5

The execution of a drying step before the micronization step, as well as a further drying step after the step of micronization of the soybeans, according to the present process, advantageously allows to obtain a soybean flour, in particular a full-fat soybean flour, having a high solubility (corresponding to an NSI value higher than 95%), and that is flavor-neutral, i.e. substantially free of the slightly bitter taste that is typical of soy, said characteristics making it particularly suitable for the use in the fields of preparation of soybean-based food products.

The term "soy", as used herein, refers to the species *Glycine max, Glycine soja* or any species derived from *Glycine max*; preferably, varieties of white-hilum soy of the species *Glycine max.*

The expressions "soybean powder", "soybeans meal " and "soybean flour" are herein used interchangeably.

The expression "soybean flour", as used herein, means a full-fat soybean flour, i.e. characterized in that it comprises all the macronutrients (fats, proteins, carbohydrates and fibers) that are typical of soy; in fact, the soybean flour of the present invention is not defatted.

The term "NSI" or "nitrogen solubility index", as used herein, means a measurement of the solubility of the proteins in a substance. In order to determine the NSI value of the soybean flour, according to the present invention, the methodology of Araba, M., &, Dale, N.M. (1990) "Evaluation of protein solubility as an indicator of overprocessing soybean meal*".*

Poultry Science 69; 76-83, was performed.

The soybean flour obtained through the present process has an advantageously high protein content on the dry weight, in particular between 40% and 42%; said characteristic makes the use of said soybean flour particularly advantageous for the production of plant food products.

In fact, such a high protein content allows to promote the process of curdling of tofu, as well as to considerably increase the protein content of beverages of plant origin, thereby making said food products comparable to the corresponding products obtained from cow milk.

The expression "protein content", as used herein, refers to the protein content of one material, determined using the method MP/C/35 (rev 2 2017). Through the present process as described above, which only comprises dry process steps, the moisture content of soy gradually decreases, from an initial moisture content of 13%, before step a), to a moisture content of the soybean flour having a high solubility lower than 5%, preferably between 1% and 3%.

The expression "moisture content", as used herein, refers to the amount of moisture in a material, and is determined using the method ISTISAN 1996/34 (Page 7 Met B).

An additional advantage of the present process is that the soybean flour, obtained according to the present invention, has a particle size that is profitably fine, i.e. smaller than 200 $\mu$m, preferably between 190 $\mu$m and 5 $\mu$m. The particle size is calculated by the instrument of the firm Verder Scientific, model Microtrac Turbosync.

In particular, 90% of the particles has a particle size between 150 $\mu$m and 10 $\mu$m, 70% of the particles has a particle size between 80 $\mu$m and 15 $\mu$m, 50% of the particles has a particle size between 45 $\mu$m and 16 $\mu$m.

A further advantage of the present process is that the soybean flour, obtained according to the present invention, has a shelf-life, at room temperature, of several months, in particular from 6 to 12 months, preferably under vacuum, and in a packaging suitable for photosensitive products.

In particular, in fact, the soybean flour obtained according to the present process is chemically stable for its whole shelf-life, since it is not susceptible to events of primary oxidative rancidification caused by the oxidation of unsaturated fatty acids of triglycerides by means of oxygen and the catalytic action of the enzyme lipoxygenase.

The lipoxygenase content of the soybean flour described herein is advantageously reduced by at least 75% with respect to the lipoxygenase content of the starting soybeans.

In particular, the nutritional values of the soybean flour obtained according to the present process are shown below (Table 1):

Table 1: nutritional values of the soybean flour obtained by the process according to the present invention.

| | Soybean flour obtained according to the process of the present invention |
|---|---|
| TOTAL proteins | 38% $\pm$ 5% |
| Soluble proteins | 28.5% $\pm$ 5% |
| Ashes | 10% $\pm$ 5% |
| Fats | 16.5% $\pm$ 5% |
| Fibers | 18.5 $\pm$ 5% |
| Carbohydrates | 10% $\pm$ 5% |

Advantageously, the soybean flour obtained according to the process of the present invention has a high ability to absorb water, due to its characteristics of particle size, low moisture content, as well as content of soluble fibers, as defined above.

The plant products based on said soybean flour dissolved in an aqueous medium are thus characterized by a soft, homogeneous texture and a pleasant mouthfeel; moreover, said plant products do not conveniently have the slightly bitter taste that is typical of soy, since the above-mentioned soybean flour is flavor-neutral.

Moreover, the soybean flour obtained according to the process of the present invention is advantageously "clean label", i.e. it consists only of soy, in the form of flour, and does not contain any food additive or preservative.

As a consequence, this soybean flour may be conveniently used for the preparation of plant food, including, for example, tofu, fruit-based products, beverages, soups, infant food, yogurt, ice creams, pasta, bars, meat substitutes, snacks, frozen food, sweets and bakery products.

Detailed Description of the Invention

Further characteristics and advantages of the present invention will be clear from the following examples, herein described by way of nonlimiting illustration.

**EXAMPLE 1** - **Example of a process according to the present invention.**

*1. Pre-drying, selection and cleaning*

120,000 kg of soy with a moisture content equal to 22 % (determined using a Thermo 120 thermobalance, provided by the firm Zetalab), were continuously fed in a cascade dryer type DU 4000-24 with heat recovery, provided by the firm Petkus.

The pre-drying step is then performed at a temperature of 60°C for 694 minutes.

The soy, after being pre-cleaned in a Delta 146 sieving device with round sieves of 11 mm above and 3 mm underneath, of the firm Cimbria, was subsequently cooled and stored in a silo at moderate temperatures (15°C), through cyclic flows of dehumidified cold air, introduced through the Marcold refrigerator, which was outside the silo.

The soy was then cleaned of impurities, foreign bodies and abnormal beans, in order to select the best soybeans, as described below.

In particular, the cooled soybeans were fed into a cleaning and selection plant, with an hourly capacity of 6 t/h in continuous, that consists of:

- a mechanical roto-separator, with frequency of 50 Hz, provided by the firm Brambati spa;

- destoner, provided by the firm Brambati spa, with auto-air-recirculation, gravimetric plane inclined at 15° and moved by two eccentric moto-vibrators, with a counter-inclination of 5°;

- densimetric table GA210, provided by the firm Cimbria, with variable air regulation, x-axis inclination: 2°, y-axis inclination: 4°;

- Chromex optical sorter, provided by the firm Sea Cimbria, with optical resolution of 0.06 mm, and set at the following values: Dark = 3 (sensitivity index of the optical sorter); Light brown = 2 (sensitivity index of the optical sorter); speed of vibrator 1 = 60 Hz; speed of vibrator 2 = 65 Hz; speed of vibrator 3 = 67 Hz; speed of vibrator 4 = 64 Hz; speed of vibrator 5 = 65 Hz;

- sieve calibration machine (Cimbria) with diameter of 7 mm of the upper sieve, 4.5 mm of the slotted sieve in the center, and 4 mm of the round lower sieve.

The above-mentioned machineries are part of a single plant: the handling occurs through bucket elevators, screw conveyors, pneumatic systems.

Soybeans having a moisture content of 13%, determined by Thermo 120 thermobalance, provided by the firm Zetalab, were obtained and exited from the selection plant.

*2. Decortication*

The selected beans are then fed into a decorticator provided by the firm Satake, type VTA10DW(2)-T, set at 70 ampere.

### 3. Drying

The decorticated soybeans, entering the subsequent drying step, had a moisture content of 8.96%, and a protein content of 40.9%.

The moisture content was determined using the Thermo 120 thermobalance, provided by the firm Zetalab.

The protein content was determined using the Infratec 1241 protein analyzer, provided by the firm FOSS.

The soybeans, in 1,000 kg batches, were then fed into the BR600/ 1000 toaster, provided by the firm Brambati, that was set according to the following parameters:

- Time: 15 minutes and 32 seconds,

- Temperature of the toaster (drum discharge): 93.6°C.

The above-mentioned toaster was coupled with its software, provided by Brambati, with a specifically developed toasting/drying curve, for continuously controlling and monitoring the product temperature, developing an increasing temperature, until the temperature in the product reached 80°C.

When the temperature of the soybeans reached 80°C, the beans were discharged and were cooled to room temperature by the designated air system included in the toaster.

The following values of the toasted soybeans were then determined:

- moisture content equal to 7.91%, determined using the Thermo 120 thermobalance, provided by Zetalab; and

- protein content equal to 41%, determined using the Infratec 1241 protein analyzer of the firm FOSS.

### 4. Micronization

Before the micronization step, the soybeans are fed into a system of control of iron impurities provided with a 10,000-Gauss magnetic cylinder compartment, made of stainless steel AISI 304, to avoid that metal objects would go into the micronizer.

Subsequently, the soybeans were cooled to room temperature through a cryogenic screw conveyor made of stainless steel AISI 304, with a variable flow rate, by an inverter, up to a max of 4 t/hour, provided by the firm Cimma, and were then fed into a vertical-axis pulverizer with air sorter, model pps -1000-tx, provided by the firm Cimma, set at a flow rate of 1,1 t/hour, 195 ampere, frequency of the sorter at 31 Hz, frequency of the mill rotor at 49 Hz and frequency of the ventilator at 49 Hz.

At the discharge of the two filtering cyclones of the pulverizer, the feeding rotary valve INOX 304-0,37 kw - Atex20/22, and the PT100 temperature sensor for the determination of the soybeans temperature (80°C), are present.

At the end of the micronization step, a soybean micronizate having a temperature of 75°C and the following percentile particle size distribution shown in Table 2 was obtained:

| Percentiles | |
|---|---|
| d(i) | d(um) |
| 10,00 | 17,97 |
| 20,00 | 22,24 |
| 30,00 | 26,37 |
| 40,00 | 31,19 |
| 50,00 | 37,44 |
| 60,00 | 46,50 |
| 70,00 | 61,29 |
| 80,00 | 88,76 |
| 90,00 | 139,6 |
| 95,00 | 186,3 |

Table 2: percentile particle size distribution of the soybean micronizate according to Example 1.

According to the results shown in Table 2, 95% of the soybean micronizate had a particle size smaller than 190 $\mu$m. The size distribution was determined using Microtrac turbosync provided by the firm Verder Scientific.

### 5. Thermopneumatic treatment

The soybean micronizate was then fed into a thermopneumatic treatment plant (provided by the firm Brambati) to perform a flash drying.

In particular, inside the plant, the soybean micronizate is dispersed in a flow of air heated to 120°C.

Using the heat of the air flow, the soybean micronizate dries as soon as it is conveyed into the plant.

When the soybean micronizate exited the thermopneumatic plant, it had a moisture content of 2% and a temperature of 79.4°C. There are three PT100 temperature sensors, in the line of the thermopneumatic plant to check compliance with the parameters.

### 6. Cooling

The soybean micronizate was then cooled, by feeding it into the below-mentioned dehumidification and cooling system.

In particular, the soybean micronizate was fed at the flow rate of 1,000 mc/hour to the standard AHU (air handling unit) unit 1200mc/hour (provided by Brambati), set at a relative moisture equal to 40% and at a temperature of 16°C.

After dehumidification, the micronizate was fed into a pneumatic cooling line, provided by the firm Brambati, set at the temperature of 12°C.

At the end of the cooling step, soybean flour according to the present invention was obtained, said soybean flour having a moisture content equal to 2.7 %, determined using the Thermo 120 thermobalance, provided by Zetalab, an NSI value equal to 95%, and a percentile particle size distribution according to the above-mentioned Table 2.

The NSI value was determined by the methodology of Araba, M., & Dale, N.M. (1990) "Evaluation of protein solubility as an indicator of overprocessing soybean meal". Poultry Science 69; 76-83.

### EXAMPLE 2: Characterization of the soybean flour obtained by the process according to the present invention.

The characterization of samples of soybean flour obtained according to the process described in Example 1, in accordance with the following operational parameters, is shown below.

### - Sample A:

OPERATING PARAMETERS

- 

(current intensity) absorbed by the mill of the pulverizer model pps - 1000-tx (Cimma) = 183 ampere

- 

$$1,1 \text{ ton/hour}$$

- 

Frequency of the sorter of the pulverizer model pps -1000-tx (Cimma) = 25 Hz

- 

Frequency of the mill of the pulverizer model pps -1000-tx (Cimma) = 48 Hz

-

Frequency of the fan of the pulverizer model pps -1000-tx (Cimma) = 50 Hz

QUALITATIVE PARAMETERS:

- 

## Moisture (Thermo 120 thermobalance, Zetalab) = 3.36 %

- Size distribution (Microtrac turbosync, Verder Scientific):

## Table 3

| Percentiles | |
|---|---|
| **d(i)** | **d(um)** |
| **10,00** | 17,82 |
| **20,00** | 22,84 |
| **30,00** | 27,98 |
| **40,00** | 34,12 |
| **50,00** | 42,09 |
| **60,00** | 53,37 |
| **70,00** | 70,85 |
| **80,00** | 98,87 |
| **90,00** | 137,4 |
| **95,00** | 166,9 |

## Table 3: percentile particle size distribution of sample A

- **Sample B:**

OPERATING PARAMETERS

- 

i (current intensity) absorbed by the mill of the pulverizer model pps - 1000-tx (Cimma) = 183 ampere

- 

## 1,1 ton/hour

- 

Frequency of the sorter of the pulverizer model pps -1000-tx (Cimma) = 27 Hz

-

Frequency of the mill of the pulverizer model pps -1000-tx (Cimma) = 50 Hz

- 

Frequency of the fan of the pulverizer model pps -1000-tx (Cimma) = 50 Hz

QUALITATIVE PARAMETERS:

- Moisture (Thermo 120 thermobalance, Zetalab) = 2.9 %

- Size distribution (Microtrac turbosync, Verder Scientific):

## Table 4

| Percentiles | |
|---|---|
| **d(i)** | **d(um)** |
| **10,00** | 17,79 |
| **20,00** | 22,75 |
| **30,00** | 27,77 |
| **40,00** | 33,52 |
| **50,00** | 40,77 |
| **60,00** | 51,05 |
| **70,00** | 68,15 |
| **80,00** | 96,69 |
| **90,00** | 135,6 |
| **95,00** | 165,7 |

Table 4: percentile particle size distribution of sample B.

## EXAMPLE 3 - **Comparative tests**

### 1. COMPARED SAMPLES

Peroxides concentration, shelf-life, oxidation of linoleic acid by lipoxygenase enzyme of the following samples were assessed and compared:

- "p2" and "p3" samples: *decorticated* soybean flour obtained according to Example 1, except that the soybean micronizate was not subjected to the drying step by thermopneumatic treatment; p2 is a mixture of soybean flours belonging to Protéix and Mentor varieties, p3 belongs to PR91M10 species;

- "p4" and "p5" samples: *entire* soybean flour obtained according to Example 1, except that the soybeans were not decorticated, and the soybean micronizate was not subjected to the drying step by thermopneumatic treatment; p4 is a mixture of soybean flours belonging to Protéix and Mentor varieties, p5 belongs to PR91M10 species.

For each sample, there were 3 sub-samples for:

- Sampling of about 2 kg (number 4 samples): pilot test of production of a plant beverage using Roboqbo Qb8-4.

- Sampling of about 1 kg (number 4 samples): nutritional analysis, lipoxygenase activity, and number of peroxides.

- Sampling of about 1 kg (number 12 samples): subdivision into 3 subsamples, putting under vacuum and analysis at 0, 30, 60 and 180 days for the determination of the number of peroxides.

- "p2E" and "p3E" samples: decorticated soybean flours obtained according to Example 1;

- "p4E" and "p5E" samples: *entire* soybean flour obtained according to Example 1, except that the soybeans were not decorticated.

For each sample, there are 3 sub-samples for:

• Sampling of about 2 kg (number 6 samples): pilot test of production of a plant beverage using Roboqbo Qb8-4.

• Sampling of about 1 kg (number 6 samples): nutritional analysis, lipoxygenase activity, and number of peroxides.

• Sampling of about 1 kg (number 18 samples): subdivision into 3 subsamples, putting under vacuum and analysis at 0, 30, 60 and 180 days for the determination of the number of peroxides.

- Control: soybeans of PR32M 10 variety and soybeans of Proteix variety.

The p2E, p3E, p4E and p5E samples are according to the present invention, since each of them undergoes the step of thermopneumatic treatment, differently from p2, p3, p4 and p5 samples. The decortication step is optional according to the present invention.

## 2. METHODS

- Nutritional analysis: dry substance (method 930.15, AOAC 2000); crude proteins (method 976.05; AOAC 2000); crude fats (method 954.02 without acid hydrolysis AOAC 2000); ashes (method 942.05, AOAC 2000); total dietary fiber (method 991.43, AOAC 2000).

- Determination of peroxides (Shantha & Decker, J. AOAC Int. 1994, 77, 421- 424).

- Determination of lipoxygenase activity (Salcedo et al., 2010, Food Research International 2010, 43, 1187-1197).

All the results are shown as average value of three independent determinations.

## 3. RESULTS

### - *Raw materials nutritional composition*

Table 5 shows the nutritional composition (g/ 100g dry substance) of the tested samples.

It is clear that p2E, p3E, p4E and p5E samples advantageously have a considerably lower moisture content compared to the corresponding samples that were not subjected to the final drying step by thermopneumatic treatment (i.e., p2, p3, p4 and p5 samples).

| CODE | %moisture | Crude proteins | Ashes | Crude fats |
|------|-----------|----------------|-------|------------|
| p2 | 8,6±0,04 | 44,1±0,09 | 9,2±0,04 | 15,4±0,14 |
| p3 | 8,4±0,02 | 42,9±0,11 | 9,1±0,03 | 14,7±0,11 |
| p4 | 8,6±0,03 | 41,6±0,10 | 8,7±0,11 | 15,2±0,15 |
| p5 | 8,9±0,05 | 40,0±0,04 | 8,5±0,07 | 14,1±0,12 |
| p2E | 2,5±0,01 | 47,0±0,08 | 9,9±0,05 | 16,5±0,09 |
| p3E | 3,2±0,01 | 45,3±0,07 | 9,7±0,08 | 15,5±0,11 |
| p4E | 3,5±0,02 | 43,9±0,06 | 9,2±0,05 | 16,1±0,12 |
| p5E | 3,8±0,02 | 42,2±0,03 | 9,0±0,07 | 14,9±0,14 |
| M10 | - | 41,9±0,08 | - | - |
| PM | - | 41,1±0,11 | - | - |

Table 5: "M10" is the control PR32M10 soy; "PM" is the control Proteix/Mentor soy.

*- Primary oxidative rancidification during shelf-life.*

Table 6 shows the value of peroxides (PV; $MeqO_2$/kg oil) in the samples assessed at time zero (T0) and after 30 (T30), 60 (T60) and 180 (T180) days, to assess the stability of the samples during these time periods, and to assess their shelf-life (lifetime at room temperature).

| CODE | PV T0 | PV T30 | PV T60 | PV T180 |
|------|-------|--------|--------|---------|
| p2 | 0,00 | 0,99±0,007 | 1,23±0,170 | 2,16±0,068 |
| p3 | 0,00 | 0,00 | 0,00 | 1,97±0,014 |
| p4 | 0,00 | 0,00 | 0,00 | 0,00 |
| p5 | 0,00 | 0,00 | 0,00 | 0,00 |
| p2E | 0,00 | 0,00 | 0,00 | 0,00 |
| p3E | 0,00 | 0,00 | 0,00 | 0,00 |
| p4E | 0,00 | 0,00 | 0,00 | 0,00 |
| p5E | 0,00 | 0,00 | 0,00 | 0,00 |

Table 6: Values of peroxides of the samples tested in different time periods.

According to the results shown in Table 6, the p2E, p3E, p4E and p5E samples are more stable than the corresponding p2, p3 samples, during the 180 days tested. In particular, p2 sample has an onset of event of oxidative rancidification already after 30 days.

*- Lipoxygenase activity*

The percentage reduction of oxidation of linoleic acid catalyzed by the enzyme lipoxygenase extracted from the above-mentioned soybean flour samples was assessed.

The analysis was performed according to the methodology used by Salcedo et al., 2010, Food Research International 2010, 43, 1187-1197, using a spectrophotometer UV-VIS (Shimadzu model UV-1601) and linoleic acid as a substrate.

Briefly, 2 g of soybean flour sample were milled and supplemented with 10 ml of buffer $Na_3PO_4$ 0.2mol/L (pH=7.8), then centrifuged for 20 min at 10,000g at 4°C.

Subsequently, $1\mu L$ of the supernatant was added to a solution containing $4\mu L$ of a linoleic acid solution 10mmol/L and 1ml of buffer $Na_3PO_4$ 0.05 mol/L (pH=6.5) at 25°C. The absorbance was assessed against the blank (solution of linoleic acid and buffer, without the supernatant) at a wavelength of 234nm, measuring it for a time period of 2.5min, at 30s intervals.

Lipoxygenases catalyze the dioxygenation of polyunsaturated fatty acids containing a cis, cis-1,4-pentadiene structure, thus producing the corresponding fatty acid hydroperoxides. The activity of hydroperoxidation of linoleate was then spectrophotometrically assessed at 25°C by monitoring A234 increase, caused by the conversion of linoleate into the corresponding hydroperoxide (Axelrod, 1981).

Oxidation was calculated on the entire analysis interval (180 seconds), by calculating the area under the curve (AUC). The CTR sample (control) refers to the starting soy. The results are reported in Tables 7 and 8.

| CODE | AUC | Relative activity |
|---|---|---|
| p4 | 40,0 | -70,4% |
| p5 | 46,9 | -65,1% |
| p4E | 27,5 | -79,7% |
| p5E | 31,3 | -76,1% |
| CTR | 135,2 | 100 |

Table 7

| CODE | AUC | Relative activity |
|---|---|---|
| p2 | 50,9 | -63,5% |
| p3 | 45,1 | -67,8% |
| p2E | 34,3 | -75,5% |
| p3E | 28,3 | -79,7% |
| CTR | 139,8 | 100 |

Table 8

Lipoxygenase (LOX) may affect the color, the aroma (fatty acids oxidation with off-flavors production), and the nutritional properties of the food products to the detriment especially of pigments and vitamins.

The results show that p2E, p3E, p4E and p5E samples, as well as p2, p3, p4 and p5 samples, had a considerable reduction of lipoxygenase activity compared to the control.

Moreover, it can be observed that p2E, p3E, p4E and p5E samples showed a reduced lipoxygenase activity compared to p2, p3, p4 and p5 samples.

In the light of the results of the above-reported comparative tests, it is clear that p2E, p3E, p4E and p5E samples, obtained according to the process of the present invention, are definitely more chemically-stable and have a much lower moisture content compared to p2, p3, p4 and p5 samples that, differently from p2E, p3E, p4E and p5E samples, were not subjected to the step of thermopneumatic treatment.

## EXAMPLE 4 - Method for tofu preparation from the soybean flour according to the present invention

8 kg of decorticated soybean flour obtained according to the process described in Example 1 were added to 92 liters of purified water at 75°C in a Multimix homogenizer of the firm Enoop. Mixing was performed with a speed of 6000 rpm for 10 minutes, until the temperature reached 85°C.

The mixture thereby obtained was poured into the Mase tank (coagulation plant, for tofu production), with vapor addition, to keep the temperature at 82°C, and the typical process of coagulation through the "Mase" machinery for tofu production was performed.

Said machinery comprised 9 vessels moving in a clockwise rotating direction, with 3-min time intervals. 16 grams of $MgCl_2$ per kg soybean flour were added to one of the vessels.

At the end of the coagulation process, the product was placed in the curdling box and then pressed by Mase press for 12 minutes. Finally, tofu was cooled to 4 °C in the designated cooling room.

At the end of the above-mentioned process, 24 kg tofu made from the soybean flour according to the present invention were obtained.

Table 9 shows the nutritional values of the tofu obtained according to Example 4:

| Average nutritional values (100 g) | |
| --- | --- |
| Energetic value | 573 kJ / 138 kcal |
| Total fats | 8.28 g |
| - whereof saturated fats | 1.4 g |
| Carbohydrates | 0.5 g |
| - whereof sugars | 0.46 g |
| Dietary fibers | 7.0 g |
| Proteins | 12.4 g |
| Salt | 0.0046 g |

Table 9: Average nutritional values of the tofu obtained according to Example 4.

As shown in Table 9, the tofu according to the present invention has a fiber content equal to 7 gram/ 100 grams of tofu; said fiber content is considerably higher than the fiber content of the commercially available tofu, i.e. 2 gram/ 100 grams of tofu. Moreover, the process described in the present Example 4 enables to obtain 3 kg tofu from 1 kg decorticated soybean flour according to the present invention, whereas the traditional process for the production of tofu, by wet milling, enables to obtain 1-1.6 kg tofu from 1 kg soy grains (input wet milling).

### EXAMPLE 5 - Method for the preparation of a beverage from the soybean flour according to the present invention

12 kg of soybean flour obtained according to the process described in Example 1 were added to 88 liters of purified water (temperature 75°C) in a Multimix homogenizer of the firm Enoop.

Mixing was performed with a speed of 6000 rpm, for 10 minutes, until the temperature reached 85°C.

The beverage of plant origin obtained at the end of mixing had a protein content of 5% w/w.

### Claims

1.  A process for the production of a soybean flour having a high solubility corresponding to an NSI (nitrogen solubility index) value higher than 95% determined by the methodology of Araba, M., & Dale, N.M. (1990) "*Evaluation of protein solubility as an indicator of overprocessing soybean meal*". Poultry Science 69; 76-83, said process comprising the steps of:

    i) pre-drying soybeans at a temperature between 40°C and 60°C for a time period between 6 hours and 18 hours;

    a) drying said pre-dried soybeans in a first dryer set at a temperature between above 90°C and 95°C, preferably between 92°C and 95°C, for a time period between 8 minutes and 18 minutes, obtaining dried soybeans having a temperature between 75°C and 85°C;
    b) subjecting said dried soya beans kept at a temperature lower than 80°C, preferably between 0°C and 80°C, to dry micronization, thus obtaining a soybean micronizate having a particle size equal to or less than 200 microns;
    c) drying said soybean micronizate in a second dryer, which is preferably a flash drying thermopneumatic plant, set at a temperature between 110°C and 130°C for a time period less than 20 seconds, preferably between 2 seconds and 10 seconds, thus obtaining a dried soybean micronizate having a temperature between 75°C and 85°C;
    d) cooling said dried soybean micronizate, thus obtaining said soybean flour having a high solubility,

    said process not comprising any step of soaking said soybeans and/or said soybean micronizate in water or other aqueous solution.

2.  The process according to claim 1, wherein at the end of said pre-drying step i), said soybeans have a moisture content lower than 13%, preferably between 10-12%.

3. The process according to claim 1 or 2 , wherein at the end of said drying step a), said soybeans have a moisture content lower than 10%, preferably between 7% and 9%.

4. The process according to any one of claims 1 to 3, wherein after said pre-drying step i) and before said drying step a), said soybeans are subjected to a decortication step ii).

5. The process according to any one of claims 1 to 4, wherein said soybean flour having a high solubility has a moisture content lower than 5%, preferably lower than 4%, more preferably lower than 3%.

6. The process according to any one of claims 1 to 5, wherein said soybean flour having a high solubility has a particle size of less than 200 $\mu$m, preferably between 190 $\mu$m $\mu$and 5 $\mu$m.

7. The process according to any one of claims 1 to 6, wherein said soybean flour having a high solubility has an NSI value higher than 97%, preferably higher than 98%, more preferably between 98.5% and 100%.

8. The process according to any one of claims 1 to 7, wherein said soybean flour having a high solubility has a protein content higher than 35%, preferably between 38% and 45% by weight on the dry weight.

9. The process according to any one of claims 1 to 8, wherein said soybean flour having a high solubility has a shelf-life at room temperature under vacuum of more than 6 months, preferably between 6 months and 12 months.

10. The process according to any one of claims 1 to 9, wherein said soybean flour having a high solubility has a lipoxygenase content reduced by at least 75% with respect to the lipoxygenase content of said soybeans to be subjected to said step a) or said step i).

11. The process according to any one of claims 1 to 10, wherein before said step b) and after said step a), the dried soybeans are cooled down to a temperature of between 0°C and 30°C.

12. The process according to any one of claims 1 to 11, wherein said process does not comprise a step of defatting the soybeans.

13. A soybean flour having a high solubility corresponding to an NSI (nitrogen solubility index) value higher than 95%, determined by the methodology of Araba, M., & Dale, N.M. (1990) "*Evaluation of protein solubility as an indicator of overprocessing soybean meal*". Poultry Science 69; 76-83, having a moisture content lower than 4%, preferably lower than 3%, and a particle size of less than 200 $\mu$m, preferably between 190 $\mu$m and 5 $\mu$m, wherein nutritional values of said soybean flour are:

| TOTAL proteins | 38% $\pm$ 5% |
|---|---|
| Soluble proteins | 28.5% $\pm$ 5% |
| Ashes | 10% $\pm$ 5% |
| Fats | 16.5% $\pm$ 5% |
| Fibers | 18.5 $\pm$ 5% |
| Carbohydrates | 10% $\pm$ 5% |

, said soybean flour being obtainable by the process according to any one of claims 1-12 and having a lipoxygenase content reduced by at least 75% with respect to the lipoxygenase content of said soybeans to be subjected to said step a) or said step i).

14. The soybean flour having a high solubility according to claim 13, having an NSI value higher than 97%, preferably higher than 98%, more preferably between 98.5% and 100%.

15. The soybean flour having a high solubility according to claim 13 or 14, having a shelf-life at room temperature under vacuum of more than 6 months, preferably between 6 months and 12 months.

**Patentansprüche**

1. Verfahren zur Herstellung eines Sojamehls aufweisend eine hohe Löslichkeit, entsprechend einem NSI-Wert (Stickstofflöslichkeitsindex) von mehr als 95 %, bestimmt nach der Methode von Araba, M., & Dale, N.M. (1990) "*Evaluation of protein solubility as an indicator of overprocessing soybean* meal". Poultry Science 69; 76-83, wobei das Verfahren die folgenden Schritte umfasst:

   i) Vortrocknen der Sojabohnen bei einer Temperatur zwischen 40 °C und 60 °C für einen Zeitraum zwischen 6 Stunden und 18 Stunden;

   a) Trocknen der vorgetrockneten Sojabohnen in einem ersten Trockner, der auf eine Temperatur zwischen über 90 °C und 95 °C, bevorzugt zwischen 92 °C und 95 °C, eingestellt ist, für einen Zeitraum zwischen 8 Minuten und 18 Minuten, Erhalten von getrockneten Sojabohnen aufweisend eine Temperatur zwischen 75 °C und 85 °C;
   b) Unterziehen der getrockneten Sojabohnen, die bei einer Temperatur unter 80 °C, vorzugsweise zwischen 0 °C und 80 °C, gehalten werden, einer Trockenmikronisierung, dadurch Erhalten eines Sojabohnenmikronisat aufweisend eine Partikelgröße von höchstens 200 Mikrometern;
   c) Trocknen des Sojabohnenmikronisats in einem zweiten Trockner, der vorzugsweise eine thermopneumatische Schnell-Trocknungsanlage ist, die auf eine Temperatur zwischen 110 °C und 130 °C eingestellt wurde, für einen Zeitraum von weniger als 20 Sekunden, bevorzugt zwischen 2 Sekunden und 10 Sekunden, dadurch Erhalten eines getrockneten Sojabohnenmikronisats aufweisend eine Temperatur zwischen 75 °C und 85 °C;
   d) Kühlen des getrockneten Sojabohnenmikronisats, dadurch Erhalten des Sojabohnenmehls aufweisend eine hohe Löslichkeit,

   wobei das Verfahren keinen Schritt des Einweichens der Sojabohnen und/oder des Sojabohnenmikronisats in Wasser oder einer anderen wässrigen Lösung umfasst.

2. Verfahren gemäß Anspruch 1, wobei am Ende des Schritts des Vortrocknens i) die Sojabohnen einen Feuchtigkeitsgehalt von weniger als 13 %, bevorzugt zwischen 10 und 12 %, aufweisen.

3. Verfahren gemäß Anspruch 1 oder 2, wobei am Ende des Schritts des Trocknens a) die Sojabohnen einen Feuchtigkeitsgehalt von weniger als 10 %, bevorzugt zwischen 7 % und 9 %, aufweisen.

4. Verfahren gemäß einem der Ansprüche 1 bis 3, wobei die Sojabohnen nach dem Schritts des Vortrocknens i) und vor dem Schritts des Trocknens a) einem Schälschritt ii) unterzogen werden.

5. Verfahren gemäß einem der Ansprüche 1 bis 4, wobei das Sojamehl aufweisend eine hohe Löslichkeit einen Feuchtigkeitsgehalt von weniger als 5 %, bevorzugt weniger als 4 %, noch bevorzugter weniger als 3 % aufweist.

6. Verfahren gemäß einem der Ansprüche 1 bis 5, wobei das Sojamehl aufweisend eine hohe Löslichkeit eine Partikelgröße von weniger als 200 μm, bevorzugt zwischen 190 μm und 5 μm, aufweist.

7. Verfahren gemäß einem der Ansprüche 1 bis 6, wobei das Sojamehl aufweisend eine hohe Löslichkeit einen NSI-Wert von mehr als 97 %, bevorzugt mehr als 98 %, noch bevorzugter zwischen 98,5 % und 100 % aufweist.

8. Verfahren gemäß einem der Ansprüche 1 bis 7, wobei das Sojamehl aufweisend eine hohe Löslichkeit einen Proteingehalt von mehr als 35 %, bevorzugt zwischen 38 % und 45 % des Trockengewichts, aufweist.

9. Verfahren gemäß einem der Ansprüche 1 bis 8, wobei das Sojamehl aufweisend eine hohe Löslichkeit eine Haltbarkeit bei Raumtemperatur unter Vakuum von mehr als 6 Monaten, bevorzugt zwischen 6 Monaten und 12 Monaten, aufweist.

10. Verfahren gemäß einem der Ansprüche 1 bis 9, wobei das Sojamehl aufweisend eine hohe Löslichkeit einen Lipoxygenase-Gehalt aufweist, der um mindestens 75 % gegenüber dem Lipoxygenase-Gehalt der Sojabohnen, die dem Schritt a) oder dem Schritt i) unterzogen werden sollen, reduziert ist.

11. Verfahren gemäß einem der Ansprüche 1 bis 10, wobei vor dem Schritt b) und nach dem Schritt a) die getrockneten Sojabohnen auf eine Temperatur zwischen 0 °C und 30 °C abgekühlt werden.

12. Verfahren gemäß einem der Ansprüche 1 bis 11, wobei das Verfahren keinen Schritt zum Entfetten der Sojabohnen umfasst.

13. Sojamehl aufweisend eine hohe Löslichkeit, die einem NSI-Wert (Stickstofflöslichkeitsindex) von mehr als 95 % entspricht, bestimmt nach der Methode von Araba, M., & Dale, N.M. (1990) "*Evaluation of protein solubility as an indicator of overprocessing soybean meal*". Poultry Science 69; 76-83 bestimmt wurde, aufweisend einen Feuchtigkeitsgehalt von weniger als 4 %, bevorzugt weniger als 3 %, und einer Partikelgröße von weniger als 200 $\mu$m, bevorzugt zwischen 190 $\mu$m und 5 $\mu$m, wobei die Nährwerte des Sojamehls wie folgt sind:

| GESAMT-Proteine | 38 % $\pm$ 5 % |
|---|---|
| Lösliche Proteine | 28,5 % $\pm$ 5 % |
| Aschen | 10 % $\pm$ 5 % |
| Fette | 16,5 % $\pm$ 5 % |
| Ballaststoffe | 18,5 $\pm$ 5 % |
| Kohlenhydrate | 10 % $\pm$ 5 % |

wobei das Sojamehl durch das Verfahren gemäß einem der Ansprüche 1 bis 12 erhaltbar ist und einen Lipoxygenase-Gehalt aufweist, der um mindestens 75 % gegenüber dem Lipoxygenase-Gehalt der Sojabohnen, die dem Schritt a) oder dem Schritt i) unterzogen werden sollen, reduziert ist.

14. Sojamehl aufweisend eine hohe Löslichkeit gemäß Anspruch 13, aufweisend einen NSI-Wert von mehr als 97 %, bevorzugt mehr als 98 %, noch mehr bevorzugt zwischen 98,5 % und 100 %.

15. Sojamehl aufweisend eine hohe Löslichkeit gemäß Anspruch 13 oder 14, aufweisend eine Haltbarkeit bei Raumtemperatur unter Vakuum von mehr als 6 Monaten, bevorzugt zwischen 6 Monaten und 12 Monaten.

**Revendications**

1. Procédé de production d'une farine de soja ayant une solubilité élevée correspondant à une valeur NSI (indice de solubilité de l'azote) supérieure à 95% déterminée par la méthodologie de Araba, M., & Dale, N.M. (1990) « *Evaluation of protein solubility as an indicator of overprocessing soybean meal* »«. Poultry Science 69; 76-83, ledit procédé comprenant les étapes consistant à:

i) pre-sécher les graines de soja à une température comprise entre 40°C et 60°C pendant une durée comprise entre 6 heures et 18 heures;

a) sécher lesdites graines de soja pre-séchées dans un premier séchoir réglé à une température comprise entre plus de 90°C et 95°C, préférablement comprise entre 92°C et 95°C, pendant une durée comprise entre 8 minutes et 18 minutes, obtenant des graines de soja séchées ayant une température comprise entre 75°C et 85°C;
b) soumettre lesdites graines de soja séchées maintenues à une température inférieure à 80°C, préférablement comprise entre 0°C et 80°C, à une micronisation à sec, obtenant ainsi un micronisé de soja ayant une taille de particules égale ou inférieure à 200 microns;
c) sécher ledit micronisé de soja dans un deuxième séchoir, qui est préférablement une installation thermopneumatique de séchage instantané, réglé à une température comprise entre 110°C et 130°C pendant une durée inférieure à 20 secondes, préférablement comprise entre 2 secondes et 10 secondes, obtenant ainsi un micronisé de soja séché ayant une température comprise entre 75°C et 85°C;
d) refroidir ledit micronisé de soja séché, obtenant ainsi ladite farine de soja ayant une solubilité élevée,

ledit procédé ne comprenant aucune étape de trempage desdites graines de soja et/ou dudit micronisé de soja dans l'eau ou dans une autre solution aqueuse.

**2.** Procédé selon la revendication 1 , dans lequel à la fin de ladite étape de pre-séchage i), lesdites graines de soja ont une teneur en humidité inférieure à 13%, préférablement comprise entre 10% et 12%.

**3.** Procédé selon la revendication 1 ou 2 , dans lequel à la fin de ladite étape de séchage a), lesdites graines de soja ont une teneur en humidité inférieure à 10%, préférablement comprise entre 7% et 9%.

**4.** Procédé selon l'une quelconque des revendications 1 à 3, dans lequel après ladite étape de pre-séchage i) et avant ladite étape de séchage a), lesdites graines de soja sont soumises à une étape de décorticage ii).

**5.** Procédé selon l'une quelconque des revendications 1 à 4, dans lequel ladite farine de soja ayant une solubilité élevée a une teneur en humidité inférieure à 5%, préférablement inférieure à 4%, plus préférablement inférieure à 3%.

**6.** Procédé selon l'une quelconque des revendications 1 à 5, dans lequel ladite farine de soja ayant une solubilité élevée a une taille de particules inférieure à 200 $\mu$m, préférablement comprise entre 190 $\mu$m et 5 $\mu$m.

**7.** Procédé selon l'une quelconque des revendications 1 à 6, dans lequel ladite farine de soja ayant une solubilité élevée a une valeur NSI supérieure à 97%, préférablement supérieure à 98%, plus préférablement comprise entre 98,5% et 100%.

**8.** Procédé selon l'une quelconque des revendications 1 à 7, dans lequel ladite farine de soja ayant une solubilité élevée a une teneur en protéines supérieure à 35%, préférablement comprise entre 38% et 45% en poids sur le poids sec.

**9.** Procédé selon l'une quelconque des revendications 1 à 8, dans lequel ladite farine de soja ayant une solubilité élevée a une durée de conservation à température ambiante sous vide supérieure à 6 mois, préférablement comprise entre 6 mois et 12 mois.

**10.** Procédé selon l'une quelconque des revendications 1 à 9, dans lequel ladite farine de soja ayant une solubilité élevée a une teneur en lipoxygénase réduite d'au moins 75% par rapport à la teneur en lipoxygénase desdites graines de soja devant être soumises à ladite étape a) ou à ladite étape i).

**11.** Procédé selon l'une quelconque des revendications 1 à 10, dans lequel avant ladite étape b) et après ladite étape a), les graines de soja séchées sont refroidies jusqu'à une température comprise entre 0°C et 30°C.

**12.** Procédé selon l'une quelconque des revendications 1 à 11, dans lequel ledit procédé ne comprend pas une étape de dégraissage des graines de soja.

**13.** Farine de soja ayant une solubilité élevée correspondant à une valeur NSI (indice de solubilité de l'azote) supérieure à 95%, déterminée par la méthodologie de Araba, M., & Dale, N.M. (1990) « *Evaluation of protein solubility as an indicator of overprocessing soybean meal* «. Poultry Science 69; 76-83, ayant une teneur en humidité inférieure à 4%, préférablement inférieure à 3%, et une taille de particules inférieure à 200 $\mu$m, préférablement comprise entre 190 $\mu$m et 5 $\mu$m, les valeurs nutritionnelles de ladite farine de soja étant:

| Protéines TOTALES | 38% $\pm$ 5% |
| --- | --- |
| Protéines solubles | 28,5% $\pm$ 5% |
| Cendres | 10% $\pm$ 5% |
| Lipides | 16,5% $\pm$ 5% |
| Fibres | 18,5 $\pm$ 5% |
| Glucides | 10% $\pm$ 5% |

ladite farine de soja étant obtenable par le procédé selon l'une quelconque des revendications 1 à 12 et ayant une teneur en lipoxygénase réduite d'au moins 75% par rapport à la teneur en lipoxygénase desdites graines de soja devant être soumises à ladite étape a) ou à ladite étape i).

**14.** Farine de soja ayant une solubilité élevée selon la revendication 13, ayant une valeur NSI supérieure à 97%, préférablement supérieure à 98%, plus préférablement comprise entre 98,5% et 100%.

**15.** Farine de soja ayant une solubilité élevée selon la revendication 13 ou 14, ayant une durée de conservation à température ambiante sous vide supérieure à 6 mois, préférablement comprise entre 6 mois et 12 mois.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 1443160 A
- CN 107660692
- JP 2016047021 B
- JP 2004141155 B

### Non-patent literature cited in the description

- **ARABA, M.** ; **DALE, N.M.** Evaluation of protein solubility as an indicator of overprocessing soybean meal. *Poultry Science*, 1990, vol. 69, 76-83
- **ARABA, M.** ; **DALE, N.M.** *Evaluation of protein solubility as an indicator of overprocessing soybean meal*, 1990
- *Poultry Science*, vol. 69, 76-83
- **SHANTHA** ; **DECKER**. *J. AOAC Int*, 1994, vol. 77, 421-424
- **SALCEDO et al.** *Food Research International*, 2010, vol. 43, 1187-1197